(19) **Europäisches Patentamt**

**European Patent Office**

**Office européen des brevets**

(11) **EP 0 833 542 B1**

(12) **EUROPÄISCHE PATENTSCHRIFT**

(45) Veröffentlichungstag und Bekanntmachung des Hinweises auf die Patenterteilung:
**13.12.2006 Patentblatt 2006/50**

(51) Int Cl.:
*H04Q 11/04* (2006.01)      *H04L 12/28* (2006.01)

(21) Anmeldenummer: **97202892.2**

(22) Anmeldetag: **22.09.1997**

(54) **Lokales Netzwerk mit Sende- und Empfangsvorrichtung**

Local network with transmitting and receiving apparatus

Réseau local avec dispositif de transmission et de réception

(84) Benannte Vertragsstaaten:
**DE FR GB**

(30) Priorität: **27.09.1996 DE 19639845**

(43) Veröffentlichungstag der Anmeldung:
**01.04.1998 Patentblatt 1998/14**

(73) Patentinhaber:
• **Philips Intellectual Property & Standards GmbH
20099 Hamburg (DE)**
Benannte Vertragsstaaten:
**DE**
• **Koninklijke Philips Electronics N.V.
5621 BA Eindhoven (NL)**
Benannte Vertragsstaaten:
**FR GB**

(72) Erfinder:
• **Du, Yonggang Dr.-Ing.
Röntgenstrasse 24,
22335 Hamburg (DE)**
• **May, Peter, Dipl.-Ing.
Röntgenstrasse 24,
22335 Hamburg (DE)**
• **Herrmann, Christoph, Dr.-Ing.
Röntgenstrasse 24,
22335 Hamburg (DE)**

(74) Vertreter: **Volmer, Georg et al
Philips Intellectual Property & Standards GmbH,
Postfach 50 04 42
52088 Aachen (DE)**

(56) Entgegenhaltungen:
• **PETRAS D ET AL: "PERFORMANCE EVALUATION OF THE ASR-ARQ PROTOCOL FOR WIRELESS ATM" IEEE 1995 WIRELESS COMMUNICATIONS SYSTEMS SYMPOSIUM PROCEEDINGS, 27. November 1995 (1995-11-27), Seiten 71-77 77, XP002085780 ISSN: 0022-538X**
• **RAYCHAUDHURI D ET AL: "WATMNET: A PROTOTYPE WIRELESS ATM SYSTEM FOR MULTIMEDIA PERSONAL COMMUNICATION" 1996 IEEE INTERNATIONAL CONFERENCE ON COMMUNICATIONS (ICC), CONVERGING TECHNOLOGIES FOR TOMORROW'S APPLICATIONS DALLAS, JUNE 23 - 27, 1996, Bd. 1, 23. Juni 1996 (1996-06-23), Seiten 469-477, XP000625717 INSTITUTE OF ELECTRICAL & ELECTRONICS ENGINEERSISBN: 0-7803-3251-2**
• **ENG K Y ET AL: "A WIRELESS BROADBAND AD-HOC ATM LOCAL-AREA NETWORK" WIRELESS NETWORKS, Bd. 1, Nr. 2, 1. Juli 1995 (1995-07-01), Seiten 161-173, XP000524640 ISSN: 1022-0038**
• **AYANOGLU E ET AL: "MOBILE INFORMATION INFRASTRUCTURE" AT & T TECHNICAL JOURNAL, Bd. 1, Nr. 2, 21. September 1996 (1996-09-21), Seiten 143-164, XP000656011 ISSN: 8756-2324**

**EP 0 833 542 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf ein lokales, nach dem asynchronen Transfermodus arbeitendes Netzwerk mit einer ersten Sende- und Empfangsvorrichtung, die eine Funkvorrichtung zur Übertragung von Zellen an mehrere andere Sende- und Empfangsvorrichtungen enthält.

Ein lokales Netzwerk (LAN), welches nach dem asynchronen Transfermodus arbeitet, ist aus der EP 0 660 567 A2 bekannt. Dieses Netzwerk enthält Netzwerkschnittstellen mit einer Funkvorrichtung zur Übertragung von Zellen zwischen den einzelnen Netzwerkschnittstellen. Die Übertragung der Zellen erfolgt nach einem Ringprinzip. Eine Netzwerkschnittstelle übermittelt Zellen immer über den Ring, d.h. immer zu einer benachbarten Netzwerkschnittstelle. Gegebenenfalls müssen die Zellen über mehrere andere Netzwerkschnittstellen zum Bestimmungsort gegeben werden. Zur lastabhängigen Zuweisung von Zeitschlitzen für die Zellübertragung ist ein Schaltungselement vorgesehen, welches den Netzwerkschnittstellen Zeitschlitze zuweist.

Der Artikel "Performance evaluation of the ASR-ARQ Protocol for wireless ATM" von D. Petras und A Hettich, RWTH Aachen, IEEE 1995 Wireless Communications Systems Symposium Proceedings, 27.11.1995 beschreibt, ein ARQ Protokoll, welches bei einer Funkschnittstelle eines Mobilfunksnetzes verwendet wird. Mobile ATM Terminals werden vollständig in ein festes ATM Netzwerk integriert. Es ist vorgesehen, für jede virtuellen Verbindung eine ARQ-Einheit zu bilden, die Speicher zum Senden und Sortieren von Zellen verwendet.

Der Erfindung liegt die Aufgabe zugrunde, ein lokales Netzwerk zu schaffen, bei dem eine unterschiedliche Dienstanforderung in der Funkvorrichtung ermöglicht wird.

Die Erfindung wird durch die Merkmale der unabhängigen Ansprüche gelöst.

In dem erfindungsgemäßen lokalen Netzwerk können die Sende- und Empfangsvorrichtung jeweils ein Terminal sein, welches eine Station und eine Netzwerkschnittstelle bilden (adhoc wireless ATM-LAN). Die Station kann beispielsweise ein Bildfernsprecher, ein Personal-Computer, eine Workstation oder ein Femsprecher sein. Eine Netzwerkschnittstelle enthält eine wenigstens zum Verbindungsaufbau vorgesehene Steueranordnung und eine Koppelvorrichtung zur Vermittlung von Zellen zwischen Funkvorrichtung, Station und Steueranordnung. Die Terminals tauschen jeweils ihre Daten direkt mit einem anderen Terminal aus.

Es kann auch eine andere Struktur des lokalen Netzwerkes verwendet werden. Hierbei ist die erste Sende- und Empfangsvorrichtung eine Netzwerkschnittstelle, die mit mehreren anderen in einem Ring geschalteten Netzwerkschnittstellen gekoppelt ist (basestation oriented wireless ATM-LAN). Eine Netzwerkschnittstelle enthält eine wenigstens zum Verbindungsaufbau vorgesehene Steueranordnung und eine Koppelvorrichtung zur Vermittlung von Zellen zwischen Ringanschlüssen, Funkvorrichtung und Steueranordnung. Die anderen Sende- und Empfangsvorrichtungen bilden jeweils ein Terminal, welches zum Austausch von Daten mit einer Netzwerkschnittstelle vorgesehen ist. Die zuletztgenannteir Terminals enthalten keine Netzwerkschnittstelle.

In der Funkvorrichtung der ersten Sende- und Empfangsvorrichtung sind der Anzahl der anderen Sende- und Empfangsvorrichtungen entsprechende erste Pufferspeicher enthalten. Ein erster Pufferspeicher speichert alle von einer zugeordneten Netzwerkschnittstelle kommenden Zellen, die zu der Sende- und Empfangsvorrichtung übertragen werden sollen, die dem betreffenden ersten Pufferspeicher zugeordnet sind. Durch die Zuordnung der ersten Pufferspeicher zu den anderen Sende- und Empfangsvorrichtungen wird verhindert, daß eine Blockierung bei wiederholter Zellenübertragung auftritt, wenn eine bestimmte Sende- und Empfangsvorrichtung keine Zellen empfangen kann, weil sie z.B. defekt ist. Weiter kann eine Anpassung an verschiedene Übertragungsgeschwindigkeiten zwischen der ersten und anderen Sende- und Empfangsvorrichtungen durch unterschiedliche Auslesegeschwindigkeiten aus den ersten Pufferspeichern eingestellt werden. Hiermit wird u.a. erreicht, daß unterschiedliche Dienstanforderungen mittels verschiedener Pufferspeicher in der Funkvorrichtung realisiert werden.

Funkübertragung bedeutet, daß man Daten leitungsungebunden überträgt (z.B. Radioübertragung, Infrarotübertragung, Ultraschallübertragung).

Die Funkvorrichtung enthält eine erste Steuerschaltung, die zur Löschung einer Zelle in einem ersten Pufferspeicher nach einer Bestätigung eines ordnungsgemäßen Empfangs einer zugeordneten Empfangsvorrichtung vorgesehen ist. Die erste Steuerschaltung und die ersten Pufferspeicher sind einer Schaltung zuzuordnen, welche eine Funktion der LLC-Schicht (LLC = Logical link control) durchführt.

Weiter kann mit der ersten Steuerschaltung ein Sortierprozeß durchgeführt werden. Hierbei ist nach dem Einschreiben einer Zelle in einem ersten Pufferspeicher die erste Steuerschaltung zur Sortierung der Zellen in dem betreffenden ersten Pufferspeicher nach der restlichen Lebenszeit vorgesehen. Die erste Steuerschaltung berechnet die restliche Lebenszeit einer Zelle durch Subtraktion des Zeitpunktes der Berechnung und Addition des Speicherzeitpunktes von der vorgegebenen maximalen Verweildauer und gibt die Zelle mit der geringsten restlichen Lebenszeit aus einem ersten Pufferspeicher zur Auslesung frei. Durch diesen Sortierprozeß wird einerseits den unterschiedlichen Dienstanforderungen Rechnung getragen und andererseits ein sonst durchzuführendes Umsortieren von Zellen einer virtuellen Verbindung in der Empfangsvorrichtung vermieden, da die Zellen einer virtuellen Verbindung mit der längsten Verweildauer zuerst ausgelesen werden. Die Steuerschaltung sortiert nicht solche Zellen, bei denen nach einer Auslesung aus einem ersten Pufferspeicher noch nicht eine Bestätigung über den Empfang innerhalb einer Pufferungszeit eingetroffen ist oder die Wartezeit für eine Bestätigung noch nicht abgelaufen ist. Die Pufferungszeit gibt die Zeit an, in der eine Zelle noch für den Ausleseprozeß verwendet werden kann und hängt von der jeweiligen Anwendung ab. Bei einer Sprachübertragung ist die Pufferungszeit in der Regel gleich Null.

Die aus den ersten Pufferspeichern ausgelesenen Zellen werden zusammengeführt und in einem zweiten Pufferspeicher gepuffert. Eine zweite Steuerschaltung führt auch einen Sortierprozeß der im zweiten Pufferspeicher gepufferten Zellen nach der restlichen Lebenszeit durch. Die zweite Steuerschaltung und der zweite Pufferspeicher sind einer Schaltung zuzuordnen, welche eine Funktion der MAC-Schicht (MAC = Medium access control) durchführt.

Die zweite Steuerschaltung ist zur Zählung der zu einer Sende- und Empfangsvorrichtung zu sendenden Zellen und zur Weitergabe an eine Kontrollvorrichtung vorgesehen. Die Kontrollvorrichtung kann bei einem nur aus Terminals mit einer Netzwerkschnittstelle bestehenden lokalen Netzwerk ein ausgewähltes Terminal sein. Bei dem über einen Ring verbundenen Netzwerkschnittstellen, bilden Vorrichtungen der jeweiligen Netzwerkschnittstellen die Kontrollvorrichtung. Die Kontrollvorrichtung ist zur Zuweisung der Anzahl von Zellen vorgesehen, welche von einer Sende- und Empfangsvorrichtung zu einer anderen Sende- und Empfangsvorrichtung zu übertragen sind.

Die Erfindung bezieht sich ferner auf eine Funkvorrichtung einer ersten Sende- und Empfangsvorrichtung in einem lokalen, nach dem asynchronen Transfermodus arbeitenden Netzwerk zur Übertragung von Zellen an mehrere Sende- und Empfangsvorrichtungen. Die Funkvorrichtung enthält jeweils einer anderen Sende-Empfangsvorrichtung zugeordnete erste Pufferspeicher. Ein erster Pufferspeicher ist zur Speicherung einer Zelle vorgesehen, deren Bestimmungsort eine andere Sende- und Empfangsvorrichtung ist, welche dem betreffenden ersten Pufferspeicher zugeordnet ist.

Ausführungsbeispiele der Erfindung werden nachstehend anhand der Figuren näher erläutert. Es zeigen:

Fig. 1    ein lokales Netzwerk,
Fig. 2    eine in dem lokalen Netzwerk nach Fig. 1 verwendbare Netzwerkschnittstelle,
Fig. 3    ein mit einer Netzwerkschnittstelle nach Fig. 2 über eine Funkstrecke gekoppeltes Terminal,
Fig. 4    eine in einer Netzwerkschnittstelle nach Fig. 2 oder einem Terminal nach Fig. 3 enthaltenen Funkvorrichtung,
Fig. 5    ein weiters lokales Netzwerk,
Fig. 6    ein Blockschaltbild eines im lokalen Netzwerk nach Fig. 5 verwendbaren Terminals,
Fig. 7    eine in der Funkvorrichtung nach Fig. 4 enthaltene, für die Funktion der LLC-Schicht vorgesehene Schaltung und
Fig. 8    eine in der Funkvorrichtung nach Fig. 4 enthaltene, für die Funktion der MAC-Schicht vorgesehene Schaltung.

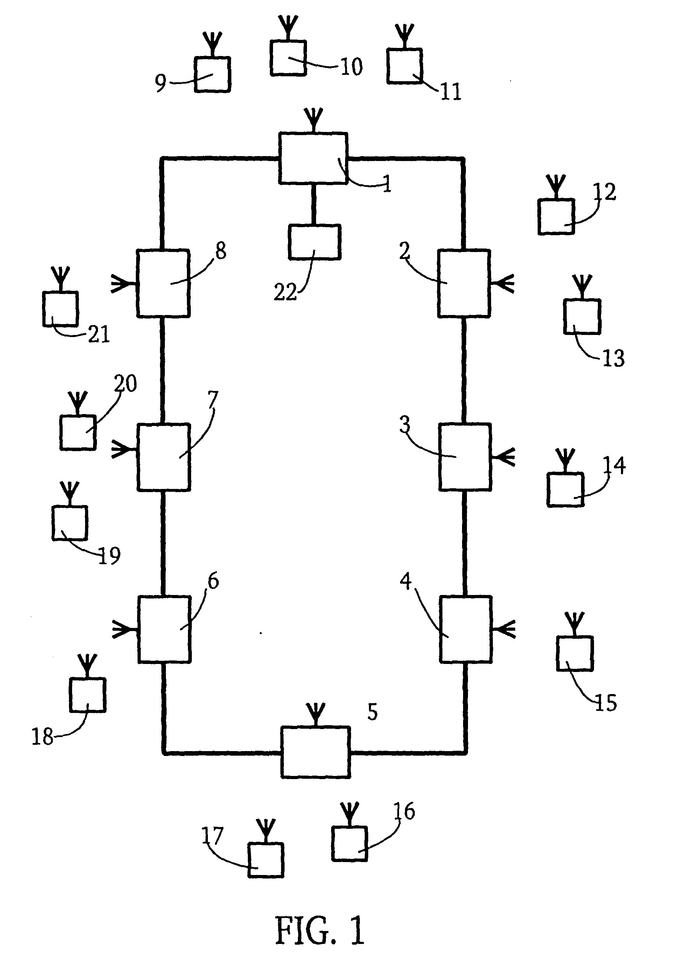

In Fig. 1 ist ein Ausführungsbeispiel eines lokalen Netzwerks mit 8 Netzwerkschnittstellen 1 bis 8 mit jeweils mindestens zwei Ringanschlüssen zur Bildung wenigstens eines Ringes dargestellt. Das lokale Netzwerk kann auch einen oder mehrere weitere Ringe enthalten. Bei der Verwendung von zwei Ringen kann der Informationsfluß über die Ringe gegenläufig sein.

Mit einer Netzwerkschnittstelle 1 bis 8 sind verschiedene Terminals 9 bis 21 über Funkübertragungswege gekoppelt. Eine Netzwerkschnittstelle 1 bis 8 und ein Terminal 9 bis 21 enthalten jeweils eine Funkvorrichtung zum Transfer von Informationen oder Nachrichten über die Funkübertragungswege. In dem Ausführungsbeispiel nach der Fig. 1 sind der Netzwerkschnittstelle 1 die Terminals 9, 10 und 11, der Netzwerkschnittstelle 2 die Terminals 12 und 13, der Netzwerkschnittstelle 3 das Terminal 14, der Netzwerkschnittstelle 4 das Terminal 15, der Netzwerkschnittstelle 5 die Terminals 16 und 17, der Netzwerkschnittstelle 6 das Terminal 18, der Netzwerkschnittstelle 7 die Terminals 19 und 20 und der Netzwerkschnittstelle 8 das Terminal 21 zugeordnet.

Ein Terminal 9 bis 21 enthält außer einer Funkvorrichtung beispielsweise einen Bildfernsprecher, einen Personal-Computer, eine Workstation oder einen Fernsprecher.

Innerhalb des Rings werden Nachrichten bzw. Informationen zwischen den Netzwerkschnittstellen 1 bis 8 nach dem asynchronen Transfermodus (ATM) mit Hilfe von Zellen übertragen. Zwischen den Terminals (9 bis 21) und der jeweils zugeordneten Netzwerkschnittstelle (1 bis 8) werden eine oder mehrere Zellen über eine Funkstrecke übertragen. Eine oder mehrere Zellen werden dabei mit für die Funkübertragung notwendigen weiteren Steuer- und Zusatzinformationen (Overhead) versehen.

Eine Zelle enthält ein Kopffeld mit beispielsweise 5 Byte und ein Informationsfeld mit beispielsweise 48 Byte. Die im Kopffeld der Zelle enthaltenen Informationen dienen insbesondere zur Adressierung und zur Durchführung von Vermittlungsfunktionen.

Die Netzwerkschnittstelle 1 ist noch mit einer Datenbank 22 gekoppelt, über die beispielsweise Daten für einen Verbindungsaufbau entnommen werden können, die über die Ressourcen der jeweiligen Terminals 9 bis 21 oder über die Netzwerktopologie Auskunft geben kann. Hierbei ist die Netzwerkschnittstelle 1 zusätzlich noch für die Verwaltung von Daten und zur Steuerung des Verbindungsaufbaus und -abbaus vorgesehen.

Die Funkübertragung zwischen einem Terminal (9 bis 21) und einer zugeordneten Netzwerkschnittstelle (1 bis 8) kann nach einem TDMA-, FDMA- oder CDMA-Verfahren (TDMA = Time Division Multiplex Access; FDMA = Frequency Division Multiplex Access; CDMA = Code Division Multiplex Access) durchgeführt werden. Die Verfahren können gegebenenfalls auch kombiniert werden. Beispielsweise ist ein Zeitschlitz eines Rahmens nach dem TDMA-Verfahren für eine bestimmte Verbindung einem Terminal zugeordnet. Die Dauer eines Zeitschlitzes könnte einem ganzzahligen Teil oder der Dauer einer oder einem Vielfachen einer Zelle und zusätzlichen für die Funkübertragung notwendigen Steuer- und Zusatzinformationen entsprechen. Den Netzwerkschnittstellen (1 bis 8) und den zugeordneten Terminals (9 bis 21) können dabei jeweils unterschiedliche Trägerfrequenzen zugeordnet sein. Die Zuordnung eines Zeitschlitzes für eine Verbindung wird z.B. während des Verbindungsaufbaus von der Netzwerkschnittstelle 1 und/oder pro Zeitabschnitt (Rahmen) in Abhängigkeit von den Anforderungen der betroffenen Terminals festgelegt. Es ist auch möglich nur das TDMA-Verfahren für das gesamte lokale Netzwerk anzuwenden. Hierbei ist jeweils ein Zeitabschnitt (Unterrahmens) eines Überrahmens einer Netzwerkschnittstelle zugeordnet.

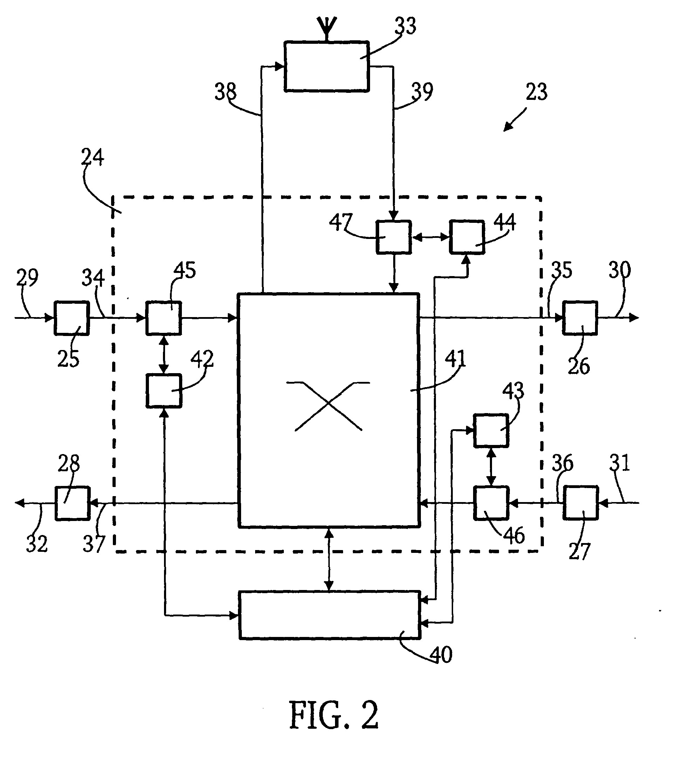

Eine Netzwerkschnittstelle 1 bis 8 nach Fig. 1, die jeweils Bestandteil von zwei gegenläufigen Ringen ist und im folgenden mit dem Bezugszeichen 23 angegeben wird, ist in der Fig. 2 detaillierter dargestellt. In einem lokalen Netzwerk können auch Netzwerkschnittstellen eingesetzt werden, die Bestandteil eines Ringes oder von mehr als zwei Ringen sind. Die Netzwerkschnittstelle 23 enthält eine Koppelvorrichtung 24, die über Pufferspeicher 25 bis 28 mit Ringanschlüssen 29 bis 32 und einer Funkvorrichtung 33 gekoppelt ist und den Zellenstrom vermittelt. Die Funkvor richtung 33 ist über die Anschlüsse 38 und 39 mit der Koppelvorrichtung 24 gekoppelt.

Der Pufferspeicher 25 ist einerseits mit dem Empfangs-Ringanschluß 29 des ersten Rings und andererseits mit einem Anschluß 34, der zur Koppelvorrichtung 24 führt, gekoppelt. Der Pufferspeicher 25 erhält noch ein erstes Empfangstaktsignal, welches aus dem Zellenstrom des Empfangs-Ringanschlusses 29 abgeleitet ist, und ein internes Taktsignal von einem Taktgenerator der Netzwerkschnittstelle 23. Der Pufferspeicher 26 ist über einen Anschluß 35 mit der Koppelvorrichtung 24 gekoppelt und liefert einen Zellenstrom an den Sende-Ringanschluß 30 des ersten Ringes. Dem Pufferspeicher 26 wird das interne Taktsignal und ein erstes Sende-Taktsignal geliefert, welches beispielsweise aus dem internen Taktsignal abgeleitet ist.

Der Pufferspeicher 27 erhält einen Zellenstrom von dem Empfangs-Ringanschluß 31 eines zweiten Ringes und liefert einen Zellenstrom über einen Anschluß 36 zur Koppelvorrichtung 24. Von einem Anschluß 37 der Koppelvorrichtung 24 empfängt der Pufferspeicher 28 Zellen, die an den Sende-Ringanschluß 32 des zweiten Ringes weitergeleitet werden. Der Pufferspeicher 27 erhält ein zweites Empfangstaktsignal, welches aus dem Zellenstrom des Empfangs-Ringanschlusses 31 abgeleitet ist, und das interne Taktsignal. Dem Pufferspeicher 28 wird das interne Taktsignal und ein zweites Sende-Taktsignal geliefert, welches beispielsweise aus dem internen Taktsignal abgeleitet ist.

In den Pufferspeichern 25 bis 28 findet jeweils eine Anpassung des Zellenstroms an ein Taktsignal statt. Die Ableitung der verschiedenen Taktsignale aus dem Zellenstrom und die Erzeugung des internen Taktsignals im Taktgenerator sind hier nicht näher dargestellt.

In der Netzwerkschnittstelle 23 ist noch eine die Koppelvorrichtung 24 steuernde Steueranordnung 40 enthalten, die beispielsweise zum Verbindungsaufbau und -abbau dient. Die Steueranordnung 40, die als Mikroprozessor realisiert sein kann, erhält und erzeugt ebenfalls Zellen. In der Koppelvorrichtung 24 ist noch ein Koppelfeld 41, drei Wegespeicheranordnungen 42, 43 und 44 und drei Empfangsschaltungen 45, 46 und 47 enthalten. In den Empfangsschaltungen 45, 46 und 47 werden jeweils die Kopffelder von über Anschlüssen 29, 31 und 39 ankommenden Zellen ausgewertet.

Im Kopffeld enthaltene Adresseninformationen werden zur Ansteuerung verschiedener Tabellen für die mit den Empfangsschaltungen 45, 46 und 47 verbundenen Wegespeicheranordnungen 42, 43 und 44 verwendet. Die in den Tabellen abgelegten Daten werden jeweils von den Empfangsschaltungen 45, 46 und 47 verwendet, um die weitere Verarbeitung und Weiterleitung der Zelle zu organisieren. Beispielsweise kann die Empfangsschaltung 45 die Zelle kopieren und mit neuen Adresseninformationen versehen. Die Originalzelle wird z.B. über das Koppelfeld 41 an die Funkvorrichtung 33 und die kopierte Zelle über das Koppelfeld 41 an den Pufferspeicher 26 gegeben. Es besteht noch die Möglichkeit, daß das Koppelfeld 41 solche Funktionen wie diese Kopierfunktion durchführt.

Die Empfangsschaltung 45 ist über den Anschluß 34 mit dem Pufferspeicher 25 gekoppelt und leitet empfangene Zellen zum Koppelfeld 41 weiter. Die Wegespeicheranordnung 42 ist mit der Empfangschaltung 45 verbunden. Die Empfangsschaltung 46, die mit der Wegespeicheranordnung 43 verbunden ist, erhält Zellen von dem Pufferspeicher 27 und gibt Zellen an das Koppelfeld 41 weiter. Zwischen dem Koppelfeld 41 und dem Anschluß 39 ist die Empfangsschaltung 47 angeordnet, die mit der Wegespeicheranordnung 44 verbunden ist.

Über die Ringanschlüsse 29 und 30 des ersten Ringes, über die Ringanschlüsse 31 und 32 des zweiten Rings und über die Anschlüsse 38 und 39 werden zwei Arten von Nutzzellen übertragen. Einerseits Anwenderzellen (user cells), die in ihrem Informationsfeld z. B. Nachrichten oder Daten des Benutzers einer zuvor aufgebauten Verbindung enthalten und andererseits Kontrollzellen (signalling cells), die in ihrem Informationsfeld Steuerungsinformationen enthalten.

Bestimmte Bits im Kopffeld einer Zelle sind für den VCI (virtual channel identifier) und für den VPI (virtual path identifier) reserviert. Der VPI gibt ein Bündel mehrerer virtueller Verbindungen an. Für den VPI sind im Kopffeld der Zelle nach derzeitigen Normungsbestimmungen 8 Bit und für den VCI 16 Bit vorgesehen.

Bei diesem Ausführungsbeispiel kennzeichnen der VPI und der VCI zusammen eine virtuelle Verbindung zwischen mindestens zwei Anwendern durch eine Nummer und werden während des Verbindungsaufbaus jeweils festgelegt. Unter einem Anwender ist z.B. ein Benutzer eines Programms in einem Terminal, ein anderes Programm, gespeicherte Daten (Terminal als Datenbank) oder auch ein Fernsprechteilnehmer zu verstehen. Zusätzlich gibt der VPI noch ein Bündel von virtuellen Verbindungen an. Beim Verbindungsaufbau werden bestimmte Attribute, die den durch VPI und VCI gekennzeichneten Verbindungen zugeordnet sind, in den Tabellen der Wegespeicheranordnungen 42 bis 44 gespeichert. Ein Attribut gibt beispielsweise die Verbindungsart einer virtuellen Verbindung an.

Unter einer Verbindungsart ist eine Einzel-Verbindung (unicast connection), eine Mehrfach-Verbindung (multicast connection) oder eine Verteil-Verbindung (broadcast connection) zu verstehen. Bei einer Einzel-Verbindung oder Ende-zu-Ende-Verbindung besteht eine virtuelle Verbindung eines Anwenders eines ersten Terminals mit einem Anwender eines zweiten Terminals. Bei einer Mehrfach-Verbindung oder Punkt-zu-Multipunkt-Verbindung sind mehrere Anwender von Terminals mit einem sendenden Terminal verbunden. Bei einer Verteil-Verbindung liefert eine Sendeterminal an alle anderen Terminals Zellen mit gleichem Inhalt im Informationsfeld.

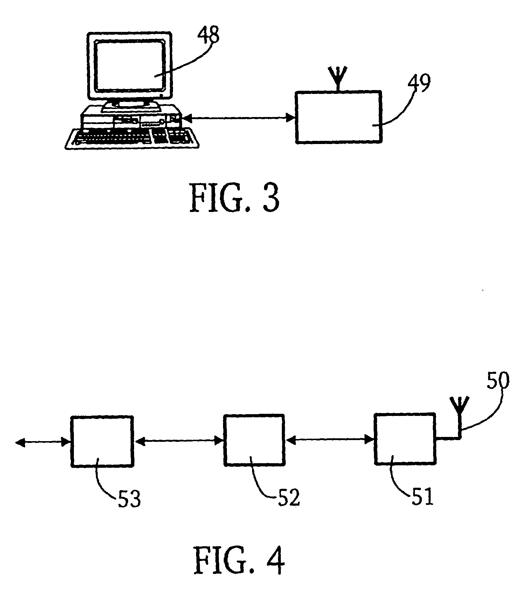

Ein Terminal 9 bis 21 kann beispielsweise aus einem Personal-Computer 48 und einer Funkvorrichtung 49 bestehen, wie Fig. 3 zeigt. Der Personal-Computer 48 tauscht Zellen mit der Funkvorrichtung 49 aus, welche zur Funkübertragung mit der zugeordneten Netzwerkschnittstelle (1 bis 8) zuständig ist.

Die Funkvorrichtung 33 in der Netzwerkschnittstelle 23 und die Funkvorrichtung 49 in einem Terminal (9 bis 21) enthalten eine Antenne 50, eine Hochfrequenzschaltung 51, ein Modem 52 und eine Protokollvorrichtung 53 (Fig. 4). Außer der Protokollvorrichtung 53 benötigen die anderen Schaltelemente 50 bis 52 der Funkvorrichtung 33 und 49 keine weitere Erläuterung, da diese aus anderen Funkvorrichtungen bekannte Schaltungselemente sind. Die Protokollvorrichtung 53 bildet aus dem empfangenen ATM-Zellenstrom Paketeinheiten, welche jeweils zumindestens eine ATM-Zelle und Steuerinformationen enthalten, und wendet hierbei die für den Mehrfachzugriff in einem Funkübertragungsmedium geeigneten und fehlerreduzierenden Protokolle an. Diese Protokolle beziehen sich auf das OSI-Schichtenmodell. Hierbei ist die Sicherungsschicht des OSI-Schichtenmodelles relevant. Diese enthält wenigstens zwei weitere Teilschichten: LLC- und MAC-Schicht. Die MAC-Schicht steuert den Mehrfachzugriff der Terminals zum Übertragungsmedium (Funkübertragungsmedium). Die LLC-Schicht (LLC = Logical Link Control) führt eine Fluß- und Fehlerkontrolle durch. Zur MAC- und LLC-Schicht kann weiteres beispielsweise dem Buch "Computer Networks" von Andrew S. Tanenbaum, Second Edition, Prentice-Hall International, Inc., 1988, Seiten 117 bis 131, 196 bis 212 und 262 bis 265 entnommen werden. Schaltungen, welche Funktionen der MAC- und LLC-Schicht beschreiben werden weiter unten erläutert.

Im folgenden sei vorausgesetzt, daß der Datenaustausch zwischen den Terminals 9 bis 21 und den Netzwerkschnittstellen 1 bis 8 nach dem TDMA- und dem FDMA-Verfahren (Zeitmultiplex- und Frequenzmultiplexverfahren) auf dem Funkübertragungsweg durchgeführt wird. Die Netzwerkschnittstellen 1 bis 8 und die zugeordneten Terminals 9 bis 21 übertragen Daten auf jeweils einer unterschiedlichen Trägerfrequenz (FDMA). Für die Übertragung von Daten zwischen einer Netzwerkschnittstelle und einem zugeordneten Terminal werden zugewiesene Zeitschlitze verwendet (TDMA). Ein Rahmen enthält einen kollisionsbehafteten Kanal oder Zeitschlitz (im folgenden als Registrierungskanal bezeichnet), mehrere kollisionsfreie MAC-Signalisierungskanäle- oder zeitschlitze für jedes Terminal und Transportkanäle oder -zeitschlitze für Nutzinformationen. Auf den Registrierungskanal kann jedes Terminal zugreifen, wodurch Kollisionen mit anderen Terminals entstehen können. Über den Registrierungskanal läßt sich ein Terminal nach dem Einschalten bei der zugeordneten Netzwerkschnittstelle registrieren. Ein MAC-Signalisierungskanal ist einem Terminal fest zugeordnet und dient dazu, die MAC-Steuerungsinformationen zwischen dem Terminal und der Netzwerkschnittstelle auszutauschen. Die MAC-Steuerungsinformationen entstammen dem zur MAC-Schicht zugehörigem Protokoll und dienen z.B. zur dynamischen Reservierung der Transportzeitschlitze für die Nutzinformation. Hierbei teilt das jeweilige Terminal der Netzwerkschnittstelle mit, wieviele Zellen jeweils in einem Puffer zur Übertragung bereitstehen. Die Netzwerkschnittstelle weist z.B. in Abhängigkeit des Pufferfüllstandes von zur Übertragung anstehenden Zellen der im gesamten Funkabdeckungsbereich liegenden Terminals die Tranportkanäle den einzelnen Terminals zu. Hierbei wird die Zuweisung in der Regel vor jedem neuen Zeitrahmen erneuert. Auch die Zuweisung für die gesamten Transportkanäle kann dynamisch erfolgen. Das bedeutet, daß bei einem ersten Rahmen mehr Kanäle für die Übertragung vom Terminal zur Netzwerkschnittstelle als Kanäle für die Übertragung von der Netzwerkschnittstelle zum Terminal und bei einem anderen Rahmen mehr Kanäle für den Transport der Zellen von der Netzwerkschnittstelle zum Terminal als Kanäle für die Übertragung von der Netzwerkschnittstelle zum Terminal vergeben. Ein Verfahren für eine MAC-Signalisierung kann z.B. der Veröffentlichung "Medium Access Control Protocol for wireless, transparent ATM access" von D. Petras, IEEE Wireless Communication Systems Symposium, Long Island, NY, Seiten 79 bis 84, November 1995 entnommen werden.

Nach dem Inbetriebsetzen eines Terminals sendet dieses der zugeordneten Netzwerkschnittstelle (z.B. Netzwerkschnittstelle 5) einen Registrierungswunsch mit der dem Terminal zugeordneten Identifikationsnummer (ID-Nummer) über den Registrierungskanal. Der Registrierungswunsch wird nach Empfang in der Funkvorrichtung 33 von der Koppelvorrichtung 24 nach Befragen der Wegespeicheranordnung 44 zur Steueranordnung 40 gesendet. Der Registrierungswunsch des Terminals wird mit Hilfe von einer Kontrollzelle von der Steueranodnung 40 der Netzwerkschnittstelle 5 über den Ring zur Netzwerkschnittstelle 1 gesendet, welche die Identifikationsnummer des Terminals in der Datenbank 22 ablegt. Der Empfang in der Netzwerkschnittstelle 1 wird mit einer zur Steueranordnung 40 der Netzwerkschnittstelle 5 gesandten Kontrollzelle quittiert und dann eine weitere Quittierungsmeldung zum Terminal zurückgesendet. Außer der Quittierungsmeldung bekommt das Terminal auch die Angabe über den zugewiesenen MAC-Signalisierungskanal mitgeteilt.

Die Steueranordnung 40 einer Netzwerkschnittstelle steuert den Verbindungsaufbau und -abbau zwischen Anwendern von Terminals. Es werden hierbei ähnliche Steuerungsvorgänge verwendet, wie sie beispielsweise in der europäischen Patentanmeldung EP 0 641 105 A2 beschrieben sind.

Im folgenden soll beispielhaft der Verbindungsaubau zwischen zwei Anwendern von Terminals beschrieben werden. Das der Netzwerkschnittstelle 6 zugeordnete Terminal 18 mit einem Anwender $A_1$ möchte mit einem Anwender $A_2$ des der Netzwerkschnittstelle 2 zugeordneten Terminals 12 eine Verbindung aufbauen.

Hierbei wird vorausgesetzt, daß mittels der MAC-Signalisierung der Austausch von ATM-Zellen (Anwender- und Kontrollzellen) über die Funkstrecke zwischen einem Terminal und der entsprechenden Netzwerkschnittstelle realisiert wird. Die Schaltungsanordnungen der MAC-Schicht ermöglichen unabhängig vom Inhalt der ATM-Zellen die oben genannte dynamische Zeitschlitzzuweise.

Von dem Terminal 18 werden zuerst Kontrollzellen mit einem Verbindungswunsch erzeugt und über die Netzwerkschnittstellen 6, 7 und 8 zur Netzwerkschnittstelle 1 übertragen. Die Steueranordnung 40 der Netzwerkschnittstelle 1 empfängt Kontrollzellen mit einem Verbindungswunsch und prüft dann, ob eine solche Verbindung möglich ist (z.B. wird geprüft, ob Terminal 12 registriert ist). Wenn die Verbindung erlaubt ist, wird dieser virtuellen Verbindung eine logische Nummer zugewiesen. Diese logische Nummer kann für den Ring und die Funkstrecken jeweils verschiedene VPI und VCI aufweisen. Eine Netzwerkschnitstelle (1 bis 8) führt diese Umsetzung durch. Mittels Kontrollzellen teilt die Netzwerkschnittstelle 1 den Steueranordnungen 40 der Netzwerkschnittstellen 2 und 6 mit, daß eine virtuelle Verbindung zwischen den Terminals 12 und 18 aufgebaut ist. Dabei werden auch die der virtuellen Verbindung zugeordneten im Ring gültigen VPI und VCI und die für den Ring reservierte Übertragungskapazität mitgeteilt. Die jeweiligen Steueranordnungen 40 der Netzwerkschnittstellen 2 und 6 müssen noch prüfen, ob für die virtuelle Verbindung zu dem jeweiligen Terminal 12 bzw. 18 genügend Übertragungskapazität über die Funkstrecke vorhanden ist. Es muß für die Funkstrecke dabei für eine Verbindung eine genügende Übertragungskapazität im Durchschnitt zur Verfügung stehen. Diese kann jedoch von Rahmen zu Rahmen variieren. Zuständig für die dynamische Zeitschlitzzuordnung könnten Schaltungsanordnungen der MAC-Schicht oder die Steueranordnung 40 sein. Die Netzwerkschnittstellen 2 und 6 teilen jeweils ihren Terminals 12 und 18 über die Funkstrecke die von Ihnen jeweils für die Funkstrecke vorgesehenen VPI und VCI für die Verbindung mit. Es können also für die Funkstrecke und den Ring unterschiedliche, aber korrespondierende VPI und VCI zugewiesen werden.

In den Netzwerkschnittstellen 1 bis 8 müssen Tabellen in bestimmten Wegespeicheranordnungen noch verändert werden. Hierbei wird ein bestimmter Schaltmodus für den VPI und VCI der virtuellen Verbindung in den Tabellen eingestellt. Diese Tabellenänderung wird über Kontrollzellen angestoßen, die von der Netzwerkschnittstelle 1 ausgesendet werden und von den Steueranordnungen 40 der Netzwerkschnittstellen 2 bis 8 empfangen und ausgewertet werden. Die eigentliche Tabellenänderung führt die Steueranordnung 40 der betroffenen Netzwerkschnittstelle (1 bis 8) durch. Hierbei werden in die Wegespeicheranordnung 44 die der Funkstrecke zugeordneten VPI und VCI und in die Wegespeicheranordnungen 42 und 43 die dem Ring zugeordneten VPI und VCI abgelegt.

Beispielsweise leitet die Netzwerkschnittstelle 6 eine vom Terminal 18 ausgesendete und empfangene Zelle an seinen entsprechenden Sende-Ringanschluß weiter. Den eigentlichen Schaltvorgang führt die Koppelvorrichtung 24 der Netzwerkschnittstelle 6 durch, die nach Auswertung der Tabelle in der Wegespeicheranordnung 44 den vom Terminal 18 empfangenen Zellstrom beispielsweise an den Sende-Ringanschluß 30 der Netzwerkschnittstelle 6 weiterleitet.

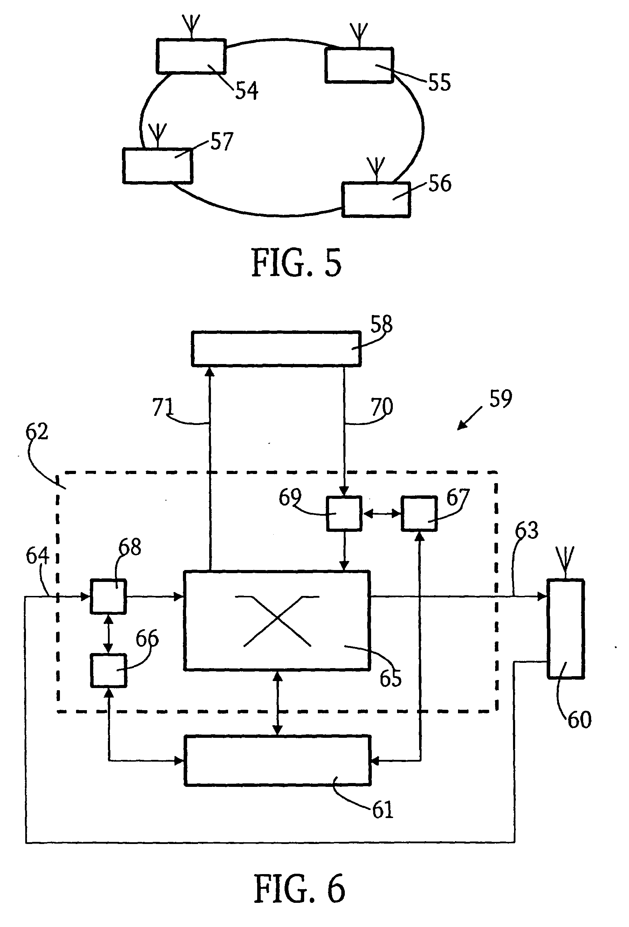

In Fig. 5 ist ein Ausführungsbeispiel eines weiteren lokalen Netzwerkes mit 4 Terminals 54 bis 57 dargestellt, die über Funkstrecken jeweils Daten austauschen. Die in Fig. 5 eingezeichnete und die Terminals 54 bis 57 umfassende Ellipse soll den Funkbereich angeben, in dem zwischen zwei Terminals (54 bis 57) eine problemlose Funkübertragung möglich ist.

Eine Terminal 54 bis 57 nach Fig. 5, welches eine Station 58, eine Netzwerkschnittstelle 59 und eine Funkvorrichtung 60 enthält, ist in der Fig. 6 detaillierter dargestellt. Die Station 58 kann beispielsweise ein Bildfernsprecher, ein Personal-Computer, eine Workstation oder ein Fernsprecher sein. Die Netzwerkschnittstelle 59 enthält eine Steueranordnung 61 und eine Koppelvorrichtung 62, die über einen Sendeanschluß 63 und einen Empfangsanschluß 64 mit der Funkvorrichtung 60 gekoppelt ist und nach dem asynchronen Transfermodus erzeugte Zellen vermittelt.

Zellen können entweder von der Steueranordnung 61 oder der Station 58 erzeugt werden und von der Funkvorrichtung 60 über die Funkstrecke empfangen werden. Die Steueranordnung 61, die als Mikroprozessor realisiert sein kann, dient beispielsweise zum Aufbau und -abbau von virtuellen Verbindungen, z.B. zwischen zwei Anwendern verschiedener Terminals.

In der Koppelvorrichtung 62 ist noch ein Koppelfeld 65, zwei Wegespeicheranordnungen 66 und 67 und zwei Empfangsschaltungen 68 und 69 enthalten. Die Empfangsschaltung 68 ist mit dem Empfangsanschluß 64, mit einem Eingang des Koppelfeldes 65 und mit der Wegespeicheranordnung 66 verbunden. Ein Ausgang des Koppelfeldes 65 ist an den Sendeanschluß 63 angeschlossen. Zwischen einem Ausgangsanschluß 70 der Station 58 und einem weiteren Eingang des Koppelfeldes 65 ist die Empfangsschaltung 69 angeordnet, welche mit der Wegespeicheranordnung 67 gekoppelt ist. Ein Eingangsanschluß 71 der Station 58 ist noch mit einem weiteren Ausgang des Koppelfeldes 65 verbunden.

In den Empfangsschaltungen 68 und 69 werden jeweils die Kopffelder der über den Empfangsanschluß 64 und den Ausgangsanschluß 70 ankommenden Zellen ausgewertet. Im Kopffeld enthaltene Adresseninformationen werden zur Ansteuerung verschiedener Tabellen für die mit den Empfangsschaltungen 68 und 69 verbundenen Wegespeicheranordnungen 66 und 67 verwendet. Die in den Tabellen abgelegten Daten werden jeweils von den Empfangsschaltungen 68 und 69 verwendet, um die weitere Verarbeitung und Weiterleitung der Zelle zu organisieren. Beispielsweise kann die Empfangsschaltung 69 eine Zelle kopieren und mit neuen Adresseninformationen versehen. Die Originalzelle wird z.B. über das Koppelfeld 65 an die Funkvorrichtung 60 und die kopierte Zelle über das Koppelfeld 65 an die Station 58 zurückgegeben. Es besteht noch die Möglichkeit, daß das Koppelfeld 65 solche Funktionen wie diese Kopierfunktion durchführt. Die Empfangsschaltung 68 leitet von der Funkvorrichtung 60 empfangene Zellen zum Koppelfeld 65 weiter.

Beim Verbindungsaufbau werden bestimmte Attribute, die den durch VPI und VCI gekennzeichneten Verbindungen zugeordnet sind, in den Tabellen der Wegespeicher anordnungen 66 und 67 gespeichert. wie oben schon erwähnt, gibt ein Attribut bei spielsweise die Verbindungsart einer virtuellen Verbindung an.

Die Funkvorrichtung 60 in einem Terminal 54 bis 57 ist aus denselben Schaltungselementen aufgebaut wie die Funkvorrichtungen 33 und 49 und enthält Antenne 50, Hochfrequenzschaltung 51, Modem 52 und Protokollvorrichtung 53 (Fig. 3).

Die Funkübertragung zwischen den Terminal 54 bis 57 kann auch nach einem TDMA-, FDMA- oder CDMA-Verfähren (TDMA = Time Division Multiplex Access; FDMA = Frequency Division Multiplex Access; CDMA = Code Division Multiplex Access) durchgeführt werden. Die Verfahren können gegebenenfalls auch kombiniert werden. Beispielsweise ist ein Zeitschlitz eines Rahmens nach dem TDMA-Verfahren für eine bestimmte Verbindung einem Terminal zugeordnet. Die Dauer eines Zeitschlitzes könnte der Dauer einer oder einem Vielfachen einer Zelle und zusätzlichen für die Funkübertragung notwendigen Steuer- und Zusatzinformationen entsprechen. Die Zuordnung eines Zeitschlitzes für eine Verbindung wird z.B. vor der Übertragung eines Rahmens in Abhängigkeit von den Anforderungen der betroffenen Terminals festgelegt.

Im folgenden sei vorausgesetzt, daß der Datenaustausch zwischen den Terminals 54 bis 57 der Fig. 5 nach dem TDMA-Verfahren (Zeitmultiplexverfahren) auf dem Funkübertragungsweg durchgeführt wird. Für die Übertragung von Daten zwischen zwei Terminals (54 bis 57) werden durch das der MAC-Schicht zugehörige Protokoll zugewiesene Zeitschlitze verwendet (TDMA). Ein Rahmen enthält wie beim lokalen Netzwerk nach Fig. 1 einen kollisionsbehafteten Kanal oder Zeitschlitz (im folgenden als Registrierungskanal bezeichnet), mehrere kollisionsfreie MAC-Signalisierungskanäle- oder zeitschlitze und Transportkanäle oder -zeitschlitze für Nutzinformationen. Auf den Registrierungskanal kann jedes Terminal zugreifen, wodurch Kollisionen mit anderen Terminals entstehen können. Über den Registrierungskanal läßt sich ein Terminal nach dem Einschalten bei dem Terminal registrieren, welches für das lokale Netzwerk die Managementfunktion durchführt. Dieses Terminal, dessen Steueranordnung 61 für das Management zuständig ist, wird im folgenden als Controller bezeichnet.

Ein MAC-Signalisierungskanal ist einem Terminal fest zugeordnet und dient dazu, die MAC-Steuerungsinformationen zwischen dem Terminal und dem Controller auszutauschen. Die MAC-Steuerungsinformationen entstammen dem zur MAC-Schicht zugehörigem Protokoll und dienen z.B. zur dynamischen Reservierung der Transportzeitschlitze für die Nutzinformation. Hierbei teilt das jeweilige Terminal dem Controller mit, wieviele Zellen jeweils in einem Puffer zur Übertragung bereitstehen. Der Controller weist z.B. in Abhängigkeit des Pufferfüllstandes von zur Übertragung anstehenden Zellen der im gesamten Funkbereich liegenden Terminals die Tranportkanäle den einzelnen Terminals zu. Hierbei wird die Zuweisung in der Regel vor jedem neuen Zeitrahmen erneuert. Auch die Zuweisung für die gesamten Transportkanäle kann dynamisch erfolgen. Das bedeutet, daß bei einem ersten Rahmen mehr Kanäle für die Übertragung vom Terminal 54 zum Terminal 56 als Kanäle für die Übertragung von dem Terminal 55 zum Terminal 54 und bei einem anderen Rahmen mehr Kanäle für den Transport der Zellen vom Terminal 55 zum Terminal 54 als Kanäle für die Übertragung vom Terminal 54 zum Terminal 56 vom Controller vergeben worden sind.

In dem lokalen Netzwerk nach Fig. 5 kann beispielsweise durch einen dynamischen in den jeweiligen Terminals (54 bis 57) verteilten Algorithmus entschieden werden, daß das Terminal 54 der Controller. Der Controller kann während eines Rahmens z.B. dem Terminal 55 einen ersten Transportzeitschlitz oder -kanal für die Übertragung von Daten zum Terminal 56, den zweiten Transportkanal dem Terminal 56 zur Übertragung von Daten zum Terminal 55, den dritten Transportkanal wieder dem Terminal 56 zur Übertragung von Daten zum Terminal 54, den vierten Transportkanal dem Terminal 54 zur Übertragung von Daten zum Terminal 57, den fünften Transportkanal dem Terminal 57 zur Übertragung von Daten zum Terminal 55 usw. zur Verfügung stellen. Der Controller kann nach Empfang aller MAC-Signalisierungsinformationen einen Optimierungsprozeß durchführen, um im Mittel jedem Terminal eine optimale Anzahl an Transportkanälen zur Verfügung zu stellen.

Weiter dient der Controller auch dazu, einen Verbindungsaufbau- und abbau durchzuführen. Bevor eine Verbindung aufgebaut werden kann, muß ein Terminal beim Controller angemeldet werden. Hierbei sendet ein Terminals nach dem Inbetriebsetzen dem Controller einen Registrierungswunsch mit der dem Terminal zugeordneten Identifikationsnummer (ID-Nummer) über den Registrierungskanal. Der Registrierungswunsch wird nach Empfang in der Funkvorrichtung 60 des Controllers von der Koppelvorrichtung 62 nach Befragen der Wegespeicheranordnung 66 zur Steueranordnung 61 gesendet. Der Controller legt die Identifikationsnummer des Terminals in z.B. in einer mit der Steueranordnung gekoppelten Datenbank ab. Der Empfang im Controller wird durch eine zum Terminal gesendete Quittierungsmeldung bestätigt. Außer der Quittierungsmeldung bekommt das Terminal auch die Angabe über den zugewiesenen MAC-Signalisierungskanal mitgeteilt.

Im folgenden soll beispielhaft der Verbindungsaufbau zwischen zwei Anwendern von Terminals beschrieben werden. Das Terminal 55 mit einem Anwender $A_3$ möchte mit einem Anwender $A_4$ des Terminals 57 eine Verbindung aufbauen. Der Controller ist das Terminal 54. Hierbei wird vorausgesetzt, daß mittels der MAC-Signalisierung der Austausch von ATM-Zellen (Anwender- und Kontrollzellen) über die direkte Funkstrecke zwischen zwei Terminals realisiert wird. Die Schaltungsanordnungen der MAC-Schicht ermöglichen unabhängig vom Inhalt der ATM-Zellen die oben genannte dynamische Zeitschlitzzuweisung.

Von dem Terminal 55 werden zuerst Kontrollzellen mit einem Verbindungswunsch erzeugt und zum Controller übertragen. Die Steueranordnung 61 des Controllers erhält Kontrollzellen mit einem Verbindungswunsch und prüft dann, ob eine solche Verbindung möglich ist (z.B. wird geprüft, ob Terminal 57 registriert ist). Wenn die Verbindung erlaubt ist, wird dieser virtuellen Verbindung eine logische Nummer in Form von VPI und VCI zugewiesen. Mittels Kontrollzellen teilt der Controller den Steueranordnungen 61 der Terminals 55 und 57 mit, daß eine virtuelle Verbindung aufgebaut ist. Die Steueranordnung 61 des Controllers hat zuvor geprüft, ob für die virtuelle Verbindung genügend Übertragungskapazität über die Funkstrecke vorhanden ist. Es muß für die Funkstrecke dabei für eine Verbindung eine genügende Übertragungskapazität im Durchschnitt zur Verfügung stehen. Diese kann jedoch während der Funkübertragung von Rahmen zu Rahmen variieren. Zuständig für die dynamische Zeitschlitzzuordnung während der Funkübertragung ist die Steueranordnung 61 des Controllers oder Schaltungen der MAC-Schicht. Während des Verbindungsaufbaus werden auch die jeweils für einen bestimmten Übertragungsabschnitt im Netzwerk (z.B. Funkstrecke) und einem Schaltungsabschnitt (Anschlüsse 70 und 71) im Terminal die vorgesehenen VPI und VCI für die Verbindung mitgeteilt.

In den Netzwerkschnittstellen 59 der Terminals 55 und 57 müssen Tabellen in bestimmten Wegespeicheranordnungen noch verändert werden. Hierbei wird ein bestimmter Schaltmodus für die jeweilige virtuelle Verbindung in den Tabellen eingestellt. Diese Tabellenänderung wird über Kontrollzellen angestoßen, die vom Controller ausgesendet werden und von den Steueranordnungen 61 der Terminals 55 und 57 empfangen und ausgewertet werden. Die eigentliche Tabellenänderung führt die Steueranordnung 61 jeder Netzwerkschnittstelle 59 in den Terminals 55 und 57 durch. Hierbei werden in die Wegespeicheranordnung 66 und 67 zugeordneten VPI und VCI abgelegt.

Beispielsweise leitet die Netzwerkschnittstelle 59 eines Terminals die von einer zugeordneten Station 58 ausgesendete Zelle an seinen entsprechenden Sendeanschluß 63 weiter. Den eigentlichen Schaltvorgang führt dabei das Koppelfeld 65 der Koppelvorrichtung 62 durch, die nach Auswertung der Tabelle in der Wegespeicher anordnung 67 den empfangenen Zellstrom entsprechend weiterleitet.

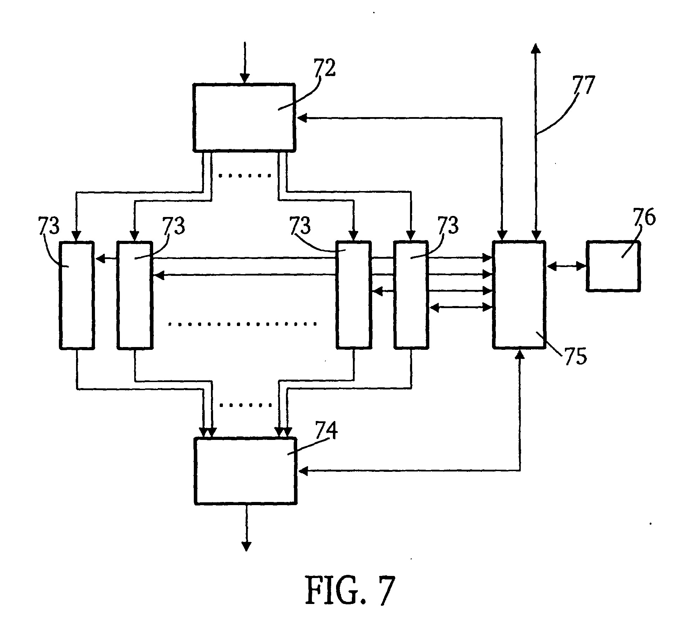

Wie oben erwähnt, führen Schaltungen, die in der Protokollvorrichtung 53 (Fig. 4) der Funkvorrichtung 33 (Fig. 2) oder 60 (Fig. 6) enthalten sind, Funktionen der MAC- und LLC-Schicht aus. Eine für die Funktion der LLC-Schicht vorgesehene Schaltung, die im folgenden als LLC-Schaltung bezeichnet wird, ist in Fig. 7 dargestellt. Diese enthält eine Auswerteschaltung 72, mehrere Pufferspeicher 73 (erste Pufferspeicher), einen Zwischenspeicher 74, eine zur Steuerung der verschiedenen Schaltungselemente der LLC-Schaltung vorgesehene LLC-Steuerschaltung 75 (erste Steuerschaltung) und einen Tabellenspeicher 76. Die Auswerteschaltung 72 erhält ATM-Zellen von der Netzwerkschnittstelle 23 (Fig. 2) oder 59 (Fig. 6) und wertet beispielsweise das Kopffeld der eintreffenden Zelle für die Weiterleitung der Zelle aus. Statt dessen kann auch eine Zusatzinformation der Zelle hinzugefügt sein, die in der Auswerteschaltung 72 für die Weiterleitung ausgewertet wird. In Abhängigkeit von der Auswertung der Zelle wird diese in einen oder mehrere bestimmte Pufferspeicher 73 eingeschrieben. Hierbei wird durch Steuerungsinformationen, welche die Auswerteschaltung 72 der LLC-Steuerschaltung 75 liefert, ein oder mehrere bestimmte Pufferspeicher 73 durch die LLC-Steuerschaltung 75 zum Einschreiben freigegeben. Die Funktion der Pufferspeicher 73 kann ein RAM-Speicher (Random Access Memory) unter entsprechender Steuerung der LLC-Steuerschaltung 75 realisiert werden.

Ist die LLC-Schaltung gemäß Fig. 7 Bestandteil der Funkvorrichtung 33 und somit Bestandteil eines lokalen Netzwerkes mit über einen Ring verbundenen Netzwerkschnittstellen 1 bis 8 (Fig. 1), sind insgesamt (n + 1) Pufferspeicher in der LLC-Schaltung enthalten. Die Variable n ist gleich der Anzahl von Terminals, die einer Netzwerkschnittstelle (1 bis 8) zugeordnet sind. n Pufferspeicher sind also für eine Einzel- oder Unicast-Verbindung oder eine Mehrfach- oder Multicast-Verbindung vorgesehen. Bei einer Multicast-Verbindung wird eine in der Auswerteschaltung 72 ankommende Zelle entsprechend der Anzahl der durch die Multicast-Verbindung vorgegebenen Verbindungen kopiert und in die entsprechenden Pufferspeicher eingeschrieben. Ein weiterer Pufferspeicher ist für Zellen einer Verteil- oder Broadcast-Verbindung vorgesehen.

Die LLC-Schaltung, welche sich in einer Funkvorrichtung 49 eines Terminals 9 bis 21 befindet weist einen Pufferspeicher auf, da die Verbindung zu anderen Terminals im Funkabdeckungsbereich der zugeordneten Netzwerkschnittstelle (1 bis 8) und zu Terminals anderer Netzwerkschnittstellen (1 bis 8) über die zugeordnete Netzwerkschnittstelle abgewickelt wird. Sonst weist die LLC-Schaltung eines Terminals 9 bis 21 die gleichen Schaltungselemente und Funktionen auf, wie die LLC-Schaltung gemäß Fig. 7.

Ist die LLC-Schaltung gemäß Fig. 7 in einem Terminal 1 bis 4 eines lokalen Netzwerkes nach Fig. 5 enthalten, sind in einer solchen LLC-Schaltung insgesamt n Pufferspeicher vorhanden. Die Variable n ist gleich der Anzahl von Terminals im Funkbereich des lokalen Netzwerkes nach Fig. 5. (n - 1) Pufferspeicher dienen also für die Pufferung von Zellen für eine Einzel- oder Unicast-Verbindung oder eine Mehrfach- oder Multicast-Verbindung zu jeweils (n - 1) anderen Terminals. Bei einer Multicast-Verbindung wird eine in der Auswerteschaltung 72 ankommende Zelle entsprechend der Anzahl der durch die Multicast-Verbindung vorgegebenen Verbindungen kopiert und in die entsprechenden Pufferspeicher eingeschrieben. Zur Pufferung von Zellen für eine Verteil- oder Broadcast-Verbindung ist ein weiterer Pufferspeicher bestimmt.

Ebenfalls wird die Auslesung der Zellen aus den jeweiligen Pufferspeichern 73 von der LLC-Steuerschaltung 75 gesteuert. Die ausgelesenen Zellen werden in dem Zwischenspeicher 74 zwischengespeichert. Hierbei wird keine Pufferung von Zellen vorgenommen, sondern die jeweils neu eingeschriebenen Zellen überschreiben eventuell noch vorhandene Zellen. Eine Kopie der Zelle verbleibt jedoch weiterhin in einem Pufferspeicher 73 bis der ordnungsgemäße Empfang von der die Zelle empfangenden Funkvorrichtung (z.B. 49) bestätigt worden ist. Eine in einem Pufferspeicher 73 befindliche Zelle wird von der LLC-Steuerschaltung 75 gelöscht, wenn der ordnungsgemäße Empfang bestätigt worden ist. Ein weiterer Löschvorgang wird durchgeführt, wenn der Aufenthalt einer Zelle eine vorgegebene Pufferungszeit (timeout) überschreitet. Falls die Bestätigung über den Empfang einer Zelle innerhalb einer auf die Übertragungsgeschwindigkeit angepaßten Wartezeit nicht erfolgt oder der Empfang der Zelle als nicht ordnungsgemäß innerhalb der Pufferungszeit bestätigt worden ist, wird die Aussendung der Zelle wiederholt.

Weiter führt die LLC-Steuerschaltung 75 eine Sortierung der Zellen in jeweils einem Pufferspeicher 73 durch und zwar dann, wenn eine Zelle von der Auswerteschaltung 72 geliefert worden ist. Zellen in einem Pufferspeicher können zu verschiedenen virtuellen Verbindungen gehören und somit unterschiedliche, maximal erlaubte Pufferungszeiten aufweisen. Eine Pufferungszeit für eine Sprachverbindung ist in der Regel sehr viel geringer (oder gleich Null) als eine Pufferungszeit für eine Datenverbindung beispielsweise zwischen zwei Personal-Computern. Die Sortierung wird nach der restlichen Lebenszeit (residual lifetime) der Zellen durchgeführt. Die restliche Lebenszeit wird über folgende Formel von der LLC-Steuerschaltung 75 berechnet:

$$RL = ML - CT + AT$$

Hierbei entspricht die Variable RL der restlichen Lebenszeit, die Variable ML der maximalen Verweildauer (maximum delay), die Variable CT dem Zeitpunkt der Berechnung (current time) und die Variable AT dem Speicherzeitpunkt (arrival time). Die maximale Verweildauer ist immer größer als die Pufferungszeit. Die Sortierung wird nach der restlichen Lebenszeit durchgeführt, d.h. die Zelle mit der geringsten restlichen Lebenszeit ist diejenige Zelle, die dann aus einem Pufferspeicher 73 zuerst ausgelesen wird. Falls eine Zelle aus einem Pufferspeicher 73 vor der Sortierung ausgelesen worden ist und eine Bestätigung über den ordnungsgemäßen Empfang noch nicht eingetroffen ist oder die vorgegebene Wartezeit für die Bestätigung noch nicht abgelaufen ist, wird diese Zelle nicht in den Sortierprozeß einbezogen und ist die Zelle, welche dann wieder zuerst ausgelesen wird.

Jeder Zelle sind unter der logischen Nummer der virtuellen Verbindung (Kombination aus VPI und VCI) weitere Parameter zugeordnet, wie ein Bestimmungsort, eine Pufferungszeit und eine maximale Verweildauer. Wenn eine virtuelle Verbindung aufgebaut wird, können diese Parameter zur LLC-Steuerschaltung 75 über eine weitere Verbindung 77, die eine Schnittstelle zwischen einer Netzwerkschnittstelle 23 oder 59 und der LLC-Schaltung angibt, oder mittels Kontrollzellen übertragen werden. Wenn die Auswerteschaltung 72 solche Kontrollzellen erkennt, werden diese direkt zur LLC-Steuerschaltung 75 geleitet. Die von der LLC-Steuerschaltung 75 empfangenen Parameter werden unter der entsprechenden logischen Nummer der virtuellen Verbindung in dem Tabellenspeicher 76 ablegt. Es ist auch möglich diese Parameter jeder einzelnen Zelle in den jeweiligen Pufferspeichern 73 als Zusatzinformation anzuhängen. In diesem Fall kann dann der Tabellenspeicher 76 wegfallen.

Mit der Speicherung einer Zelle in einem Pufferspeicher 73 können auch jeweils die der Zelle zugeordneten Parameter maximale Verweildauer, Pufferungszeit und Speicherzeitpunkt mit abgelegt werden, um einen schnelleren Zugang zu den entsprechenden Daten zu ermöglichen. Es ist auch möglich den Speicherzeitpunkt in dem Tabellenspeicher oder einem anderen der LLC-Steuerschaltung 75 zugeordneten Speicher abzulegen. Es sei noch erwähnt, daß die LLC-Steuerschaltung 75 als Mikro- oder Signalprozessor mit entsprechenden Peripherieelementen ausgebildet sein kann.

In der Regel werden die Zellen aus den Pufferspeichern 73 jeweils gleichmäßig ausgelesen. Es können jedoch mehrere Pufferspeicher bei der Auslesung bevorzugt werden.

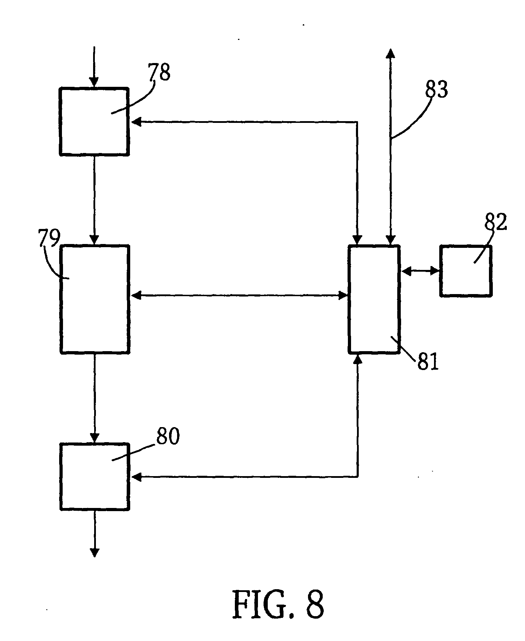

Die LLC-Schaltung ist also dazu vorgesehen, eine Fluß- und Fehlerkontrolle durchzuführen. Eine mit der LLC-Schaltung gekoppelte für die Funktion der MAC-Schicht vorgesehene Schaltung, die im folgenden als MAC-Schaltung bezeichnet wird, ist in Fig. 8 dargestellt ist. Wie schon ausgeführt, ermöglicht die MAC-Schaltung den kollisionsfreien Mehrfachzugriff auf das Funkübertragungsmedium. Die vom Zwischenspeicher 74 der LLC-Schaltung abgegebenen Zellen werden einer weiteren Auswerteschaltung 78 der MAC-Schaltung zugeführt, die noch einen weiteren Pufferspeicher 79 (zweiter Pufferspeicher), einen weiteren Zwischenspeicher 80, eine zur Steuerung der verschiedenen Schaltungselemente der MAC-Schaltung vorgesehene MAC-Steuerschaltung 81 (zweite Steuerschaltung) und einen weiteren Tabellenspeicher 82. Die von der Auswerteschaltung 78 empfangenen Zellen werden nach der Auswertung in den Pufferspeicher 79 eingeschrieben. Hierbei kann, wie bei der Erläuterung zur LLC-Schaltung schon erläutert, entweder das Kopffeld der Zelle oder eine der Zelle hinzugefügte Zusatzinformation ausgewertet. Das Ergebnis der Auswertung wird der MAC-Steuerschaltung 81 geliefert, die den Einschreibvorgang in den Pufferspeicher 79 steuert. Nachdem eine Zelle im Pufferspeicher 79 eingeschrieben worden ist, führt die MAC-Steuerschaltung 81 eine Sortierung nach der restlichen Lebenszeit (residual lifetime) durch. Hierbei wird dieselbe Berechnung wie bei der Sortierung der Zellen in einem Pufferspeicher 73 durch die LLC-Steuerschaltung 75 ausgeführt:

$$RL = ML - CT + AT$$

Die Variable RL entspricht der restlichen Lebenszeit, die Variable ML der maximalen Verweildauer (maximum delay), die Variable CT dem Zeitpunkt der Berechnung (current time) und die Variable AT dem Speicherzeitpunkt (arrival time). Eine Zelle, die gerade übertragen werden soll, wird in den Sortierprozeß nicht mit einbezogen.

Die MAC-Schaltung führt im Gegensatz zur LLC-Schaltung keine Wiederholung der Zellenübertragung durch. Der zweite Pufferspeicher 79 dient lediglich zur Pufferung der Zellen, bis eine MAC-Kontrollvorrichtung eine Freigabe zur Sendung der bestimmten Zellen erlaubt. Die MAC-MAC-Kontrollvorrichtung kann bei Verwendung der MAC-Schaltung in einer Netzwerkschnittstelle des lokalen Netzwerkes nach Fig. 1 entweder die Steueranordnung 40 oder die MAC-Steuerschaltung 81 sein. Bei einem Terminal in einem lokalen Netzwerk nach Fig. 5 ist die MAC-Kontrollvorrichtung entweder die Steueranordnung 61 oder die MAC-Steuerschaltung 81. Im letztgenannten Fall ist das Terminal der Controller.

Die MAC-Schaltung, welche sich in einer Funkvorrichtung 49 eines Terminals 9 bis 21 befindet weist ebenfalls einen zweiten Pufferspeicher auf. Die Verbindung zu anderen Terminals im Funkabdeckungsbereich der zugeordneten Netzwerkschnittstelle (1 bis 8) und zu Terminals anderer Netzwerkschnittstellen (1 bis 8) kann über die zugeordnete Netzwerkschnittstelle abgewickelt wird. Die MAC-Schaltung eines Terminals 9 bis 21 ist genauso aufgebaut wie die MAC-Schaltung nach Fig. 8. Die MAC-Schaltung einer Funkvorrichtung 49 erhält eine Zeitschlitzzuweisung von der MAC-Kontrollvorrichtung der zugeordneten Netzwerkschnittstelle.

Ein Terminal des lokalen Netzwerkes nach Fig. 5, das nicht den Controller zusätzlich bildet, erhält eine Zeitschlitzzuweisung von der MAC-MAC-Kontrollvorrichtung des zugeordneten Controllers. Die MAC-MAC-Kontrollvorrichtung einer Netzwerkschnittstelle nach Fig. 1 und des Controllers nach Fig. 5 ist selbstverständlich auch für die Zeitschlitzzuweisung an die zugeordnete (eigene) MAC-Schaltung zuständig, wenn diese beabsichtigt, Zellen selbst auszusenden.

In dem Tabellenspeicher 82 sind unter der logischen Nummer (VPI und VCI) einer virtuellen Verbindung zwei Parameter abgelegt. Das ist der Bestimmungsort der Zelle und die maximal zulässige Verweildauer. Diese Parameter können bei einem Verbindungsaufbau entweder mittels von Kontrollzellen über die Auswerteschaltung 78 oder über eine Verbindung 83 zwischen MAC-Steuerschaltung 81 und Netzwerkschnittstelle 23 oder 59 der MAC-Steuerschaltung 81 zugeführt werden. Die Parameter werden in dem Tabellenspeicher 82 abgelegt. Die Parameter können auch jeweils als Zusatzinformation zusammen mit der zugeordneten Zelle über die Auswerteschaltung 78 geliefert werden und im Pufferspeicher 79 gepuffert werden. In diesem Fall kann der Tabellenspeicher 82 wegfallen. Ferner können auch in dem Pufferspeicher 79 weitere Parameter, wie z.B. der Speicherzeitpunkt, als Zusatzinformation abgelegt werden.

Es wird eine dynamische Zeitschlitzzuweisung in der MAC-Schaltung durchgeführt. Dabei teilt die MAC-Steuerschaltung 81 der zugeordneten MAC-Kontrollvorrichtung mit, wieviele Zellen für welchen Bestimmungsort im zweiten Pufferspeicher 79 gespeichert sind. Die MAC-Kontrollvorrichtung führt eine Optimierung bezüglich der von den verschiedenen Terminals gewünschten zu übertragenden Zellen durch und weist dann den Terminals Zeitschlitze zu einem bestimmten Rahmen zu. Nach der Zuweisung von wenigstens einem Zeitschlitz werden der Zahl der Zeitschlitze und der Dauer eines Zeitschlitzes entsprechende Zellen zu dem zugewiesenen Zeitpunkt des Rahmens aus dem Pufferspeicher 79 ausgelesen und zum Modem 52 geliefert.

**Patentansprüche**

1. Lokales, nach dem asynchronen Transfermodus arbeitendes Netzwerk mit einer ersten Sende- und Empfangsvorrichtung (1 bis 8, 54 bis 57), die eine Funkvorrichtung (33, 60) enthält, wobei die Funkvorrichtung (33, 60) zur Übertragung von Zellen an mehrere andere Sende- und Empfangsvorrichtungen (9 bis 21, 54 bis 57) vorgesehen ist, wobei die Sende- und Empfangsvorrichtung (1 bis 21, 54 bis 57) erste Pufferspeicher (73) zur Speicherung einer Zelle enthält, deren Bestimmungsort eine erste oder eine andere Sende- und Empfangsvorrichtung (9 bis 21, 54 bis 57) ist, wobei die jeweils anderen Sende- und Empfangsvorrichtungen (9 bis 21, 54 bis 57) eine Funkvorrichtung (49) zur Übertragung von Zellen zu der jeweils zugeordneten ersten Sende- und Empfangsvorrichtung (1 bis 8, 54 bis 57) aufweisen, **dadurch gekennzeichnet, dass** der wenigstens eine erste Pufferspeicher (73) der ersten und der anderen Sende- und Empfangsvorrichtung (1 bis 8, 54 bis 57) in der Funkvorrichtung (33, 49, 60) angeordnet ist und der erste Pufferspeicher (73) der ersten Sende- und Empfangsvorrichtung (1 bis 8, 54 bis 57) einer der mehreren anderen Sende- und Empfangsvorrichtungen (1 bis 8, 54 bis 57) zugeordnet ist und die erste Sende- und Empfangsvorrichtung (1 bis 8, 54 bis 57) als Netzwerkschnittstelle (23) ausgebildet ist, die Speicher (25-28) zur Speicherung von Zellen eines Zellenstroms aufweist, wobei der Zellenstrom von einer mit der ersten Sende- und Empfangsvorrichtung (1 bis 8, 54 bis 57) gekoppelten anderen ersten Sende- und Empfangsvorrichtung (1 bis 8, 54 bis 57) stammt oder zur Aussendung an eine angeschlossene andere erste Sende- und Empfangsvorrichtung (1 bis 8, 54 bis 57) vorgesehen ist.

2. Lokales Netzwerk nach Anspruch 1, **dadurch gekennzeichnet, dass** die Funkvorrichtung (49, 60) eine erste Steuerschaltung (75) enthält, die zur Löschung einer Zelle in einem ersten Pufferspeicher (73) nach einer Bestätigung eines ordnungsgemässen Empfangs einer zugeordneten Empfangsvorrichtung vorgesehen (1 bis 21, 54 bis 57) ist.

3. Lokales Netzwerk nach Anspruch 2, **dadurch gekennzeichnet, dass** nach dem Einschreiben einer Zelle in einem ersten Pufferspeicher (73) die erste Steuerschaltung (75) zur Sortierung der Zellen in dem betreffenden ersten Pufferspeicher (73) nach der restlichen Lebenszeit vorgesehen ist, und dass die erste Steuerschaltung (75) zur Berechnung der restliche Lebenszeit einer Zelle durch Subtraktion des Zeitpunktes der Berechnung und Addition des Speicherzeitpunktes von der vorgegebenen maximalen Verweildauer vorgesehen ist, und dass die erste Steuerschaltung (75) zur Freigabe der Auslesung der Zelle mit der geringsten restlichen Lebenszeit aus einem ersten Pufferspeicher (73) vorgesehen ist.

4. Lokales Netzwerk nach Anspruch 3, **dadurch gekennzeichnet, dass** die erste Steuerschaltung (75) nicht zur Sortierung solcher Zellen vorgesehen ist, bei denen nach einer Auslesung aus einem ersten Pufferspeicher (73) noch nicht eine Bestätigung über den Empfang innerhalb einer Pufferungszeit eingetroffen ist oder die Wartezeit für eine Bestätigung noch nicht abgelaufen ist.

5. Lokales Netzwerk nach Anspruch 4, **dadurch gekennzeichnet, dass** ein zweiter Pufferspeicher (79) zum Empfang einer aus einem ersten Pufferspeicher (73) ausgelesenen Zelle vorgesehen ist und dass eine zweite Steuerschaltung (81) zur Sortierung der im zweiten Pufferspeicher (79) gepufferten Zellen nach der restlichen Lebenszeit vorgesehen ist.

6. Lokales Netzwerk nach Anspruch 5, **dadurch gekennzeichnet, dass** die zweite Steuerschaltung (81) zur Zählung der zu einer Sende- und Empfangsvorrichtung (1 bis 21, 54 bis 57) zu sendenden Zellen und zur Weitergabe an eine Kontrollvorrichtung (1 bis 8, 54 bis 57) vorgesehen ist und dass die Kontrollvorrichtung (1 bis 8, 54 bis 57) zur Zuweisung der Anzahl von Zellen vorgesehen ist, welche zu einer bestimmten Sende- und Empfangsvorrichtung (1 bis 21, 54 bis 57) zu übertragen sind.

7. Lokales Netzwerk nach einem der Ansprüche 1 bis 6, **dadurch gekennzeichnet, dass** die Sende- und Empfangsvorrichtungen (54 bis 57) jeweils ein Terminal mit einer Station (58) und einer Netzwerkschnittstelle (59) bilden, die eine wenigstens zum Verbindungsaufbau vorgesehene Steueranordnung (61) und eine Koppelvorrichtung (62) zur Vermittlung von Zellen zwischen Funkvorrichtung (60), Station (58) und Steueranordnung (61) enthält, und dass die Terminals (54 bis 57) jeweils zum direkten Datenaustausch mit einem anderen Terminal (54 bis 57) vorgesehen sind.

8. Lokales Netzwerk nach einem der Ansprüche 1 bis 6, **dadurch gekennzeichnet, dass** die erste Sende- und Empfangsvorrichtung als Netzwerkschnittstelle (1 bis 8) ausgebildet ist, die mit mehreren anderen in einem Ring geschalteten Netzwerkschnittstellen (1 bis 8) gekoppelt ist,

dass eine Netzwerkschnittstelle (1 bis 8, 23) eine wenigstens zum Verbindungsaufbau vorgesehene Steueranordnung (40) und eine Koppelvorrichtung (24) zur Vermittlung von Zellen zwischen Ringanschlüssen (29 bis 32), Funkvorrichtung (33) und Steueranordnung (40) enthält und

dass andere Sende- und Empfangsvorrichtungen (9 bis 21) jeweils ein Terminal bilden, welche jeweils zum Austausch von Daten mit einer Netzwerkschnittstelle (1 bis 8) vorgesehen ist.

9. Funkvorrichtung (33, 60) einer ersten Sende- und Empfangsvorrichtung (1 bis 8, 54 bis 57) in einem lokalen, nach dem asynchronen Transfermodus arbeitenden Netzwerk gemäß den Ansprüchen 1-8.

**Claims**

1. A local area network operating in the asynchronous transfer mode, with a first transmitting and receiving apparatus (1 to 8, 54 to 57), which transmitting and receiving apparatus includes a radio device (33, 60) for transmitting cells to a plurality of other transmitting and receiving apparatus (9 to 21, 54 to 57), in which the transmitting and receiving apparatus (1 to 21, 54 to 57) comprises first buffers (73) for storing a cell whose destination is a first or another transmitting and receiving apparatus (9 to 21, 54 to 57), the respective other transmitting and receiving apparatus (9 to 21, 54 to 57)having a radio device (49) for transmitting cells to the respective assigned first transmitting and receiving apparatus (1 to 8, 54 to 57), **characterized in that** the at least one first buffer memory (73) of the first and of the other transmitting and receiving apparatus (1 to 8, 54 to 57) is provided in the radio device (33, 49, 60) and the first buffer memory (73) of the first transmitting and receiving apparatus (1 to 8, 54 to 57) is assigned to one of the plurality of other transmitting and receiving apparatus (1 to 8, 54 to 57) and the first transmitting and receiving apparatus (1 to 8, 54 to 57) is arranged as a network interface (23) that comprises memories (25-28) for storing cells of a cell stream, the cell stream originating from another first transmitting and receiving apparatus (1 to 8, 54 to 57) coupled to the first transmitting and receiving apparatus (1 to 8, 54 to 57) or for transmission to a connected other first transmitting and receiving apparatus (1 to 8, 54 to 57).

2. The local area network as claimed in claim 1, **characterized in that** the radio device (49, 60) comprises a first controller (75) which is used for deleting a cell in a first buffer memory (73) after an assigned receiver device (1 to 21, 54 to 57) has acknowledged a proper reception.

3. A local area network as claimed in claim 2, **characterized in that** after a cell has been written into a first buffer memory (73), the first controller (75) is used for sorting the cells in the respective first buffer memory (73) in dependence on the residual lifetime, **in that** the first controller (75) is used for computing the residual lifetime of a cell by subtracting the instant at which the computation takes place and adding the instant at which the storage of the predefined maximum dwell time takes place and **in that** the first controller (75) is used for releasing the reading of the cell that has the shortest residual lifetime from a first buffer memory (73).

4. The local area network as claimed in claim 3, **characterized in that** the first controller (75) is not used for sorting such cells for which an acknowledgement of the reception within a time-out has not yet arrived after the cells have been read from a first buffer memory (73), or when the waiting period for an acknowledgement has not yet elapsed.

5. The local area network as claimed in claim 4, **characterized in that** a second buffer memory (79) is used for receiving a cell read from a first buffer memory (73) and **in that** a second controller (81) is used for sorting the cells buffered in the second buffer memory (79) as a function of the residual lifetime.

6. The local area network as claimed in claim 5, **characterized in that** the second controller (81) is used for counting the cells to be transmitted to a transmitting and receiving apparatus (1 to 21, 54 to 57) and for transporting them to a control device (1 to 8, 54 to 57), and **in that** the control device (1 to 8, 54 to 57) is used for assigning the number of cells which are to be transmitted to a specific transmitting and receiving apparatus (1 to 21, 54 to 57).

7. The local area network as claimed in any one of the claims 1 to 6, **characterized in that** the transmitting and receiving apparatus (54 to 57) form each a terminal comprising a station (58) and a network interface (59), which network interface (59) comprises a controller (61) provided at least for the connection set-up and a switching device (62) for switching cells between radio device (60), station (58) and controller (61), and **in that** the terminals (54 to 57) are used for directly exchanging data with another terminal (54 to 57).

8. The local area network as claimed in one of the claims 1 to 6, **characterized in that** the first transmitting and receiving apparatus are arranged as network interfaces (1 to 8) which are coupled with a plurality of other network interfaces (1 to 8) to a ring, **in that** a network interface (1 to 8, 23) comprises a controller (40) provided at least for setting up the connection and a switching device (24) for switching cells between ring connections (29 to 32), a radio device (33) and a controller (40), and **in that** other transmitting and receiving apparatus (9 to 21) form each a terminal which is used for exchanging data with a network interface (1 to 8).

9. A radio device (33, 60) of a first transmitting and receiving apparatus (1 to 8, 54 to 57) in a local area network operating in the asynchronous transfer mode as claimed in the claims 1 - 8.

## Revendications

1. Réseau local fonctionnant en mode de transfert asynchrone avec un premier dispositif de transmission et réception (1 à 8, 54 à 57) qui contient un dispositif radio (33, 60), le dispositif radio (33, 60) étant prévu pour la transmission de cellules à plusieurs autres dispositifs de transmission et réception (9 à 21, 54 à 57), le dispositif de transmission et réception (9 à 21, 54 à 57) contenant une première mémoire tampon (73) pour l'enregistrement d'une cellule dont le lieu de destination est un premier ou un autre dispositifs de transmission et réception (9 à 21, 54 à 57), les autres dispositifs de transmission et réception respectifs (9 à 21, 54 à 57) présentant un dispositif radio (49) pour la transmission de cellules vers le premier dispositif de transmission et réception (1 à 8, 54 à 57) respectivement attribué, **caractérisé en ce qu'**au moins une première mémoire tampon (73) du premier et des autres dispositifs de transmission et de réception (1 à 8, 54 à 57) est disposée dans le dispositif radio (33, 49,60) et la première mémoire tampon (73) du premier dispositif de transmission et de réception (1 à 8, 54 à 57) est attribuée à l'un des plusieurs autres dispositifs de transmission et de réception (1 à 8, 54 à 57) et le premier dispositif de transmission et de réception (1 à 8, 54 à 57) est conçu comme une interface de réseau (23), qui présente des mémoires (25 - 28) pour l'enregistrement de cellules d'un flux de cellules, le flux de cellules provenant d'un autre premier dispositif de transmission et de réception (1 à 8, 54 à 57) couplé au premier dispositif de transmission et de réception (1 à 8, 54 à 57) ou étant prévu pour la transmission à un autre premier dispositif de transmission et de réception (1 à 8, 54 à 57) raccordé.

2. Réseau local selon la revendication 1, **caractérisé en ce que** le dispositif radio (49, 60) contient un premier circuit de commande (75) qui est prévu pour l'effacement d'une cellule dans une première mémoire tampon (73) après une confirmation d'une réception régulière d'un dispositif de réception attribué (1 à 21,54 à 57).

3. Réseau local selon la revendication 2, **caractérisé en ce qu'**après l'enregistrement d'une cellule dans une première mémoire tampon (73), le premier circuit de commande (75) est prévu pour le triage des cellules dans la première mémoire tampon (73) correspondante en fonction de la durée de vie résiduelle et
que le premier circuit de commande (75) est prévu pour le calcul de la durée de vie résiduelle d'une cellule par soustraction du moment du calcul et addition du moment d'enregistrement de la durée de séjour maximale préalablement déterminée et
que le premier circuit de commande (75) est prévu pour le déblocage de la lecture de la cellule avec la durée de vie résiduelle minimale à partir d'une première mémoire tampon (73).

4. Réseau local selon la revendication 3, **caractérisé en ce que** le premier circuit de commande (75) n'est pas prévu pour le triage de telles cellules, une confirmation de la réception dans un temps de mise en antémémoire n'ayant pas encore été reçue après une lecture à partir d'une première mémoire tampon (73) ou le temps d'attente n'ayant pas encore expiré pour une confirmation.

5. Réseau local selon la revendication 4, **caractérisé en ce qu'**une deuxième mémoire tampon (79) est prévue pour la réception d'une cellule lue à partir d'une première mémoire tampon (73) et
qu'un deuxième circuit de commande (81) est prévu pour le triage des cellules enregistrées dans la deuxième mémoire tampon (79) en fonction de la durée de vie résiduelle.

6. Réseau local selon la revendication 5, **caractérisé en ce**
que le deuxième circuit de commande (81) est prévu pour le comptage des cellules à transmettre à un dispositif de transmission et de réception (1 à 21, 54 à 57) et pour la transmission à un dispositif de contrôle (1 à 8, 54 à 57) et
que le dispositif de contrôle (1 à 8, 54 à 57) est prévu pour l'affectation du nombre de cellules qui doivent être transmises à un dispositif de transmission et de réception (1 à 21, 54 à 57) déterminé.

7. Réseau local selon l'une des revendications 1 à 6, **caractérisé en ce que** les dispositifs de transmission et de réception (54 à 57) forment respectivement un terminal avec une station (58) et une interface de réseau (59) qui contient un dispositif de commande (61) prévu au moins pour l'établissement d'une liaison et un dispositif de couplage (62) en vue de la commutation de cellules entre un dispositif radio (60), une station (58) et un dispositif de commande (61) et que les terminaux (54 à 57) sont prévus respectivement pour l'échange direct de données avec un autre terminal (54 à 57).

8. Réseau local selon l'une des revendications 1 à 6, **caractérisé en ce que** le premier dispositif de transmission et de réception est conçu comme une interface de réseau (1 à 8) qui est couplée à plusieurs autres interfaces de réseau montées en un cycle (1 à 8), qu'une interface de réseau (1 à 8, 23) contient un dispositif de commande (40) prévu au moins pour l'établissement d'une liaison et un dispositif de couplage (24) pour la commutation de cellules entre des bornes de cycle (29 à 32), un dispositif radio (33) et un dispositif de commande (40) et
que d'autres dispositifs de transmission et de réception (9 à 21) forment respectivement un terminal qui est respectivement prévu pour l'échange de données avec une interface de réseau (1 à 8).

9. Dispositif radio (33, 60) d'un premier dispositif de transmission et de réception (1 à 8, 54 à 57) dans un réseau local fonctionnant en mode de transfert asynchrone conformément aux revendications 1 - 8.

FIG. 1

FIG. 2

FIG. 3

FIG. 4

FIG. 5

FIG. 6

FIG. 7

FIG. 8